# EUROPEAN PATENT APPLICATION

(11) **EP 1 589 039 A1**
(43) Date of publication of application: **26.10.2005**
(21) Application number: 04705499.4
(22) Date of filing: 27.01.2004
(51) Int. Cl.: C08F 2/50

(54) **GELATED COLLOID CRYSTAL PRECURSOR AND GELATED COLLOID CRYSTAL, AND METHOD AND APPARATUS FOR PREPARING GELATED COLLOID CRYSTAL**

(30) Priority: 28.01.2003 JP 2003018546; 22.12.2003 JP 2003425183
(71) Applicant: National Institute for Materials Science, Tsukuba-shi, Ibaraki 305-0047 (JP); HAMAMATSU PHOTONICS K. K., Hamamatsu-shi, Shizuoka 435-0051 (JP)
(72) Inventor: SAWADA, Tsutomu, National Institute For Materials, Tsukuba-shi, Ibaraki 3050047 (JP); TOYOTAMA, Akiko, National Institute For Materials, Tsukuba-shi, Ibaraki 3050047 (JP); KANAI, Toshimitsu National Institute For Materials, Tsukuba-shi, Ibaraki 3050047 (JP); YAMANAKA, Junpei, National Institute For Materials, Tsukuba-shi, Ibaraki 3050047 (JP); ITO, Kensaku, National Institute For Materials, Tsukuba-shi, Ibaraki 3050047 (JP); TAKIGUCHI, Yoshihiro, C/O Hamamatsu Photonics K.K., Hamamatsu-shi, Shizuoka 4350051 (JP)
(74) Representative: Vossius & Partner
(86) International application number: PCT/JP2004/000693
(87) International publication number: WO 2004/067580

(57) **Abstract**

Gelled colloidal crystals obtained by ultraviolet irradiation gelation means proposed so far in the art are inadequate in term of homogeneous gelation as far as their deep portions, and gelled colloidal crystals obtained by use of gelation means relying upon a light source in the visible light range in place of that ultraviolet irradiation has several problems such as difficulty with selection of polymerization initiators and generation of gas bubbles. The object of the invention is to provide a colloidal crystal gelled homogeneously to within, from which those problems are eliminated.

To this end, a colloidal solution using an aqueous liquid as a disperse medium with a monomer or macromer added thereto and camphorquinone, riboflavin or their derivative contained therein as a polymerization initiator is irradiated with light having a wavelength component in the range of at least 400 nm to 500 nm for the purpose of gelation, thereby providing a solution to the aforesaid problems.

## Description

### ART FIELD

The present invention relates generally to a colloidal crystal to be gelled, which is a precursor for a gelled colloidal crystal functioning as a photonic crystal, a gelled colloidal crystal that is obtained by gelling that colloidal crystal to be gelled by light irradiation, and a process and system for the preparation of that gelled colloidal crystal. More specifically, the invention is concerned with a gelled colloidal crystal of improved optical quality, which is obtained by fixing or immobilizing a colloidal crystal that remains flowing as it is, using a polymer gel.

### BACKGROUND ART

In a so-called colloidal dispersion in which fine particles with a uniform enough particle size are dispersed in a solvent, if conditions such as an increased concentration of fine particles and a decreased concentration of ions in the solvent are put in order, there is then obtained a state where the fine particles are lined up three-dimensionally and periodically into a crystal-like structure. The colloidal dispersion in such a state is referred to as a colloidal crystal (for instance, see non-patent publication 1). That colloidal crystal is a sort of so-called photonic crystal, and found to produce a unique optical phenomenon in response to light. For this reason, attention has recently been paid to possible applications of the colloidal crystal to optical elements, as reported in some academic papers (see non-patent publications 2 and 3).

However, the above colloidal crystal is, in a manner of speaking, a kind of fluid in a state with fine particles dispersed in a liquid; the arrangement of particles is susceptible of becoming out of order by environmental perturbations such as vibrations and temperature changes. In consideration of practical applications to optical elements, it has been proposed to intentionally keep back the fluidity of the colloidal crystal and immobilize the whole colloidal crystal with a polymer gel, as described in a lot of literatures (for instance, see patent publications 1 to 4, and non-patent publications 4 and 5). According to those proposals of how to immobilize colloidal crystals with polymer gels, a polymerizable monomer (or macromer), a crosslinking agent and a photo-polymerization initiator are added into a disperse medium. Then, the dispersion is irradiated with ultraviolet light to excite the photo-polymerization initiator, thereby setting off polymerization for gelation.

### Non-patent Publication 1

"Colloidal Chemistry I" edited by the Chemical Society of Japan, Tokyo Kagaku Dozin Co., Ltd., pp. 119-123 ("Colloidal Crystal" at Chapter 7, Section 7.2)

### Non-patent Publication 2

"Photonic Crystal" translated by Fujii and Inoue, Corona Co., Ltd., published on October 23, 2000

### Non-patent Publication 3

"Dictionary of Physics and Chemistry, Fifth Edition" edited by Iwanami Shoten Co., Ltd., Chapter "Photonic Crystal", Fourth Issue, published on April 25, 2000

### Non-patent Publication 4

Asher et al. J. Am. Chem. Soc. Vol. 116, 1994, pp. 4997-4998

### Non-patent Publication 5

Jethmalani and Ford, Chem. Mater. Vol. 8, 1996, pp. 2138-2146

### Patent Publication 1

United States Patent No. 5,281,370

### Patent Publication 2

United States Patent No. 6,187,599

### Patent Publication 3

United States Patent No. 5,898,004

### Patent Publication 4

EP0482394A2

We have also made some attempts on the above gelation using ultraviolet irradiation, wherein, on the basis of the prior art proposed so far, colloidal crystals are gelled by ultraviolet light irradiation for immobilization, thereby preparing colloidal crystals of good single crystallinity. However, we have found that this method is still far away from satisfactory gelling means because of having a lot of problems in the following respects.

The first problem arises by reason of the absorption and scattering of ultraviolet light by material, as set out at the following (a) and (b).
(a) Generally in the ultraviolet range, the absorption and scattering of light by material grow whereas the power of transmission of light becomes weak; especially as colloidal crystals gain thickness, light is unlikely to reach deep in them, offering problems in conjunction with homogeneous gelation. If optical elements such as lenses, filters and light diffusers used with an optical system for light irradiation are made of plastics, it is then industrially favorable due to cost reductions. In many cases, however, such elements can never be used in the ultraviolet range. Further, ultraviolet radiation is harmful to the human body. Thus, in consideration of safety at worksite, it would be more desirable to do without ultraviolet radiation.
(b) As there is a larger difference in the index of refraction between particles that form colloidal crystals and a disperse medium, it allows the scattering of light by the particles to become so intense that various properties of the colloidal crystals behaving as photonic crystals are more enhanced (for instance, see non-patent publication 2). Increasing that refractive index difference could be achieved by use of a material having as large a refractive index difference as possible, and titanium dioxide could be promising as such a material. However, titanium dioxide is a typical photocatalyst that is excited by ultraviolet radiation, and upon ultraviolet irradiation, there is an undesired decomposition of organic polymer components contained in the colloidal crystals to be gelled, resulting in limited application of titanium dioxide.
   To add up to this, the second problem arises by reason of the inability of ultraviolet light to transmit through the structure of a colloidal crystal, as set forth at (c).
(c) That is, with the use of colloidal crystals as a photo-function element in mind, colloidal crystals sensitively acting on light having wavelengths at or near 800 nm (700 to 1,000 nm) emitted out of a widely available titanium-sapphire laser are of industrially vital importance and in great demand. Colloidal crystals acting on light having wavelengths at or near 800 nm are typical when their longest Bragg wavelength is found at or near 800 nm. Theoretical calculation of photonic crystals have already taught that colloidal crystals develop unique optical properties with respect to light having a wavelength at or near the longest Bragg wavelength in the most noticeable way (see non-patent publication 2). According to the most fundamental guideline for designing colloidal crystals acting on a titanium-sapphire laser oscillating a specific wavelength, therefore, it is desired to design them in such a way as to have their longest Bragg wavelength at or near 800 nm.

Here the longest Bragg wavelength is explained. In general crystals, to say nothing of colloidal crystals, electromagnetic waves are subjected to Bragg reflection at a lattice plane group having a specific crystallographic azimuth. The electromagnetic wave subjected to Bragg reflection at a lattice plane group having a specific azimuth becomes longest when it is vertically incident on and regularly reflected at that lattice plane group, i.e., when there is a 90° Bragg reflection, and the ensuring wavelength is proportional to a lattice plane spacing. Further, one crystal has different lattice plane groups with various crystallographic azimuths. For instance, the wavelength resulting from a 90° Bragg reflection at a lattice plane group with a maximum lattice plane spacing, such as a (111) plane in the case of a face-centered cubic lattice, and a (110) plane in the case of a body-centered cubic lattice, is the longest Bragg wavelength for that crystal.

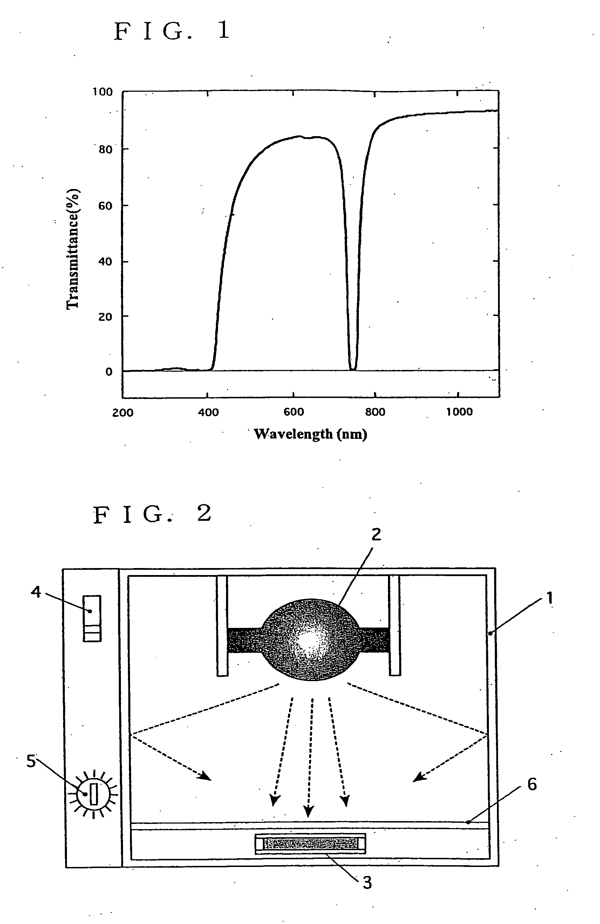

Accordingly, we have investigated the spectral characteristics of such a colloidal crystal, and found out that its transmittance with respect to light having a wavelength shorter than about a half of the longest Bragg wavelength is very low, as illustrated in Fig. 1. It is here noted that the particle material used in Fig. 1 is polystyrene having a particle size of 173 nm and a particle volume fraction concentration of about 10%.

It follows that when the longest Bragg wavelength is 800 nm, there is a very low transmittance with respect to light having a wavelength of about 400 nm or less, i.e., light in the ultraviolet range. In other words, with colloidal crystals acting on light having a wavelength at or near 800 nm emitted from a titanium-sapphire laser, there is a problem that with a conventional ultraviolet induction type polymerization, it is difficult to spread irradiation light fully all over the sample, offering an obstacle to homogeneous yet efficient gelation.

### SUMMARY OF THE INVENTION

### SUBJECT MATTER OF THE INVENTION

Gelation by ultraviolet irradiation, proposed so far in the art, has problems to be solved in many respects as already mentioned, and is still far away from perfect technical means for obtaining optically improved, high-quality gelled colloidal crystals. Especially in consideration of reducing colloidal crystals down to a practical level from now on, it would be required to ensure homogeneous gelation of not only the surfaces but also the deep parts of the crystals, and commercialization would never be successful without achieving this object. With the ultraviolet irradiation, much is still left to be desired in many respects. Primary objects of the invention are to provide solutions to the above problems, thereby achieving a colloidal crystal on a practical level with a stable reproducibility, i.e., a gelled colloidal crystal that is homogeneously gelled to within, and provide a process and system for the preparation of that gelled colloidal crystal.

With the gelation means by ultraviolet irradiation proposed so far in the art, there are three such problems (a), (b) and (c) arising from the use of wavelengths in the ultraviolet range. From this fact, it has now been found that those problems can never be overcome without any method that does not rely on ultraviolet radiation; that is, they can be overcome by use of a polymerization initiator that is excited by visible light. Polymerization initiation by visible light could be much wider in applications than that by ultraviolet light.

However, even with conversion from ultraviolet light irradiation to visible light irradiation for the purpose of obtaining optically uniform, high-quality gelled colloidal crystals by gelation of colloidal crystals using an aqueous solution as a disperse medium, it has now been found that gelation is hard to achieve with no selection of a polymerization initiator capable of reacting with visible light. So far, numerous polymerization initiators of the photo-excitation type, including the ultraviolet excitation type, have been proposed and used in the art. However, experimentation has shown that all such polymerization initiators are not always effective for obtaining homogeneously gelled crystals that are the object of the invention.

Therefore, some guidelines for selection of polymerization initiators are required; it has been found that the polymerization initiator used must satisfy three requirements given below. More specifically for the invention wherein an aqueous liquid is used as a disperse medium, the photo-polymerization initiator must have good enough water solubility, yet it must in strict sense be not insoluble. In other words, the polymerization initiator in a molecular state must be dissolved in the disperse medium composed of an aqueous liquid. This is because even in the presence of slight insolubles, optical defects are introduced in post-gelation colloidal crystals, rendering the advantage of the invention meaningless. It has also been found that the polymerization initiator used must be of nonionic (or weakly ionic) nature. The reason is that colloidal crystals are sensitive to the concentration of ions in the solution, and so even slight changes or increases in the ion concentration cause distortion or disintegration of crystals, again rendering the advantage of the invention meaningless. Another reason is that the ionic initiator makes the concentration of ions in the solution high, causing crystals to become non-homogeneous and, at worst, to disintegrate.

Further, when sensible tradeoffs are needed between increased crystal size and more enhanced optical homogeneity, care should be taken to prevent formation of gas bubbles, because the presence of gas bubbles is a direct cause of optical defects. However, some polymerization initiators incur formation of gas bubbles, as can be seen from the examples to be given later.

As described above, when such gelation as intended herein is achieved, not only is it required to convert irradiating light from ultraviolet light to visible light but there is also much difficulty in the changing and selection of the polymerization initiator. It has thus been found that it is very difficult to carry out gelation in an easy fashion.

Referring here to the gas bubble problem resulting from the aforesaid polymerization initiator, it has been found that, for instance, the use of an initiator containing an azo group may incur generation of nitrogen upon light irradiation, which in turn causes precipitation of gas bubbles and inclusion of optical defects. However, the gas bubble problem occurring from the selection of the azo group is little or no noticeable when colloidal crystals in an ordinary polycrystalline state are prepared. This gas bubble problem has been unveiled for the first time as a result of our intensive study of seeking colloidal crystals of high homogeneity by immobilization-by-gelation. In other words, those skilled in the art would have ever failed to recognize the gas bubble problem deriving from the initiator, because it was hidden by a non-homogeneity problem of the crystal sample itself, and there was no reference at all to the fact that it was caused by gasification. Referring further to this gas bubble problem, its early sign was already observed in our co-pending patent application No. 2000-217660 concerning a colloidal crystal preparation process. Since then, we were in for some problems such as the gas bubble problem due to polymerization initiators and the ensuring optical defect problem, and studied what reason they arose for. The result of that study is the invention that provides the latest information and findings.

### MEANS FOR ACHIEAVING THE SUBJECT MATTER

Based on the foregoing prior arts and a series of associated experiments and studies, the present invention has for its object the provision of a gelled colloidal crystal and its preparation process and system, which are all free from various problems with the prior arts. As a consequence of intensive and extensive studies, we have now found that if a specific polymerization initiator capable of meeting all requirements regarding water solubility, nonionic nature and no generation of gas bubbles and visible light irradiation are selectively used for conditions capable of obtaining gelled colloidal crystals free from the aforesaid problems, the desired gelled colloidal crystals can then be obtained. That is, we have found that colloidal crystals can be successfully gelled with no difficulty, if camphorquinone or riboflavin effective as the polymerization initiator capable of meeting such requirements is used in combination with a specific light source.

Having accomplished on the basis of a series of findings and successes, the present invention is embodied as set out at (1) to (33) below.
(1) A colloidal crystal to be gelled by light irradiation, using an aqueous liquid as a disperse medium and at least comprising a polymerizable monomer or macromer, a crosslinking agent and a photo-polymerization initiator, characterized in that camphorquinone, riboflavin, or their derivative is selectively used as said photo-polymerization initiator.
(2) A gelled colloidal crystal, which uses an aqueous liquid as a disperse medium, at least comprises a polymerizable monomer or macromer, a crosslinking agent and a photo-polymerization initiator, and is gelled by light irradiation, characterized in that camphorquinone, riboflavin, or their derivative is selectively used as said photo-polymerization initiator.
(3) The gelled colloidal crystal according to (2) above, wherein light having a wavelength component in a range of at least 400 nm to 500 nm is used for said light irradiation.
(4) The gelled colloidal crystal according to (2) or (3) above, which contains titanium dioxide.
(5) A gelled colloidal crystal preparation process, characterized in that a colloidal crystal to be gelled by light irradiation, using an aqueous liquid as a disperse medium and at least comprising a polymerizable monomer or macromer, a crosslinking agent and a photo-polymerization initiator, wherein camphorquinone, riboflavin, or their derivative is selectively used as said photo-polymerization initiator, is irradiated with light to polymerize said monomer or macromer for gelation of said colloidal crystal, thereby obtaining a gelled colloidal crystal.
(6) The gelled colloidal crystal preparation process according to (5) above, characterized in that light having a wavelength component in a range of at least 400 nm to 500 nm is used for said light irradiation.
(7) The gelled colloidal crystal preparation process according to (5) or (6) above, characterized in that said colloidal crystal to be gelled has a longest Bragg wavelength set at 700 to 1,000 nm.
(8) The gelled colloidal crystal preparation process according to (5) or (6) above, characterized in that said colloidal crystal to be gelled contains titanium dioxide.
(9) The gelled colloidal crystal preparation process according to (7) above, characterized in that said colloidal crystal to be gelled further contains titanium dioxide.
(10) The gelled colloidal crystal preparation process according to (5) or (6) above, characterized in that said light irradiation source is a blue discharge lamp or a blue light-emitting diode.
(11) The gelled colloidal crystal preparation process according to (7) or (8) above, characterized in that said light irradiation source is a blue discharge lamp or a blue light-emitting diode.
(12) The gelled colloidal crystal preparation process according to (9) above, characterized in that said light irradiation source is a blue discharge lamp or a blue light-emitting diode.
(13) The gelled colloidal crystal preparation process according to (5) or (7) above, characterized in that said light irradiation source is a blue laser having an emission wavelength in a range of 400 nm to 500 nm or a near infrared layer having an emission wavelength in a range of 800 nm to 1,000 nm.
(14) The gelled colloidal crystal preparation process according to (8) or (9) above, characterized in that said light irradiation source is a blue laser having an emission wavelength in a range of 400 nm to 500 nm or a near infrared layer having an emission wavelength in a range of 800 nm to 1,000 nm.
(15) The gelled colloidal crystal preparation process according to (10) above, characterized in that said blue discharge lamp is a blue neon lamp, a blue fluorescent lamp or a blue metal halide lamp.
(16) The gelled colloidal crystal preparation process according to (11) above, characterized in that said blue discharge lamp is a blue neon lamp, a blue fluorescent lamp or a blue metal halide lamp.
(17) The gelled colloidal crystal preparation process according to (12) above, characterized in that said blue discharge lamp is a blue neon lamp, a blue fluorescent lamp or a blue metal halide lamp.
(18) The gelled colloidal crystal preparation process according to (10) above, characterized in that said blue light-emitting diode is a GaN blue light-emitting diode.
(19) The gelled colloidal crystal preparation process according to (11) above, characterized in that said blue light-emitting diode is a GaN blue light-emitting diode.
(20) The gelled colloidal crystal preparation process according to (12) above, characterized in that said blue light-emitting diode is a GaN blue light-emitting diode.
(21) The gelled colloidal crystal preparation process according to (13) above, characterized in that said blue laser is an Nd:YAG laser that emits light of 473 nm in wavelength or a blue oscillating GaN laser, an argon laser that oscillates light of 458 nm or 488 nm, or an He-Cd laser that oscillates light of 442 nm.
(22) The gelled colloidal crystal preparation process according to (14) above, characterized in that said blue laser is an Nd:YAG laser that emits light of 473 nm in wavelength or a blue oscillating GaN laser, an argon laser that oscillates light of 458 nm or 488 nm, or an He-Cd laser that oscillates light of 442 nm.
(23) The gelled colloidal crystal preparation process according to (13) above, characterized in that said near infrared laser is an Nd:YAG laser that oscillates light of 946 nm in wavelength, or a titanium sapphire laser having an oscillation wavelength range of 800 nm to 1,000 nm.
(24) The gelled colloidal crystal preparation process according to (14) above, characterized in that said near infrared laser is an Nd:YAG laser that oscillates light of 946 nm in wavelength, or a titanium sapphire laser having an oscillation wavelength range of 800 nm to 1,000 nm.
(25) A gelled colloidal crystal preparation system for gelling a colloidal crystal to be gelled, which uses an aqueous liquid as a disperse medium and at least comprises a polymerizable monomer or macromer, a crosslinking agent, and camphorquinone, riboflavin, or their derivative as a photo-polymerization initiator, characterized in that said preparation system further comprises blue light as a irradiation light source.
(26) The gelled colloidal crystal preparation system according to (25) above, characterized in that said irradiation light source is a blue discharge lamp or a blue light-emitting diode.
(27) The gelled colloidal crystal preparation system according to (26) above, characterized in that said blue discharge lamp is a blue neon lamp, a blue fluorescent lamp or a blue metal halide lamp.
(28) The gelled colloidal crystal preparation system according to (26) above, characterized in that said blue light-emitting diode is a GaN blue light-emitting diode.
(29) The gelled colloidal crystal preparation system according to (25) above, characterized in that said irradiation light source is a blue laser having an emission wavelength in a range of 400 nm to 500 nm, or a near infrared laser having an emission wavelength in a range of 800 nm to 1,000 nm.
(30) The gelled colloidal crystal preparation system according to (29) above, characterized in that said blue laser is an Nd:YAG laser that emits light of 473 nm in wavelength or a blue oscillating GaN laser, an argon laser that oscillates light of 458 nm or 488 nm, or an He-Cd laser that oscillates light of 442 nm.
(31) The gelled colloidal crystal preparation system according to (29) above, characterized in that said near infrared laser is an Nd:YAG laser that oscillates light of 946 nm in wavelength, or a titanium-sapphire laser having an oscillation wavelength range of 800 nm to 1,000 nm.
(32) The gelled colloidal crystal preparation system according to (29) or (30) above, characterized by comprising scanning means capable of scanning a laser light irradiation site in any spatial configuration.
(33) The gelled colloidal crystal preparation system according to (31) above, characterized by comprising scanning means capable of scanning a laser light irradiation site in any spatial configuration.

The foregoing embodiments of the invention are quite unique over the prior art, and have unique advantages as well. That is, conventional methods known as technical means for initiating polymerization by light irradiation to gelate colloidal crystals rely exclusively on ultraviolet light irradiation, whereas the invention makes use of blue wavelengths in the visible light range. The invention is also novel and superior in that camphorquinone or riboflavin is selectively used as the polymerization initiator.

As already known in the art, camphorquinone or riboflavin per se is a polymerization initiator by visible light. However, camphorquinone has been used mainly in the field of dental materials, in which the use of ultraviolet radiation is inhibited exclusively by reason of influences on the human body, and riboflavin has often been applied to the preparation of acrylamide gels for electrophoresis. However, never until now is there any case or report of selectively using them as initiators for gelation of colloidal crystals. Camphorquinone or riboflavin has a light absorption band at or near the light wavelength of 460 nm used as the exciting wavelength for photo-polymerization initiation. However, the incorporation of this in colloidal crystals means that the resulting gelled colloidal crystals, too, have an absorption band at that wavelength. Thus, it is beyond expectation to selectively use camphorquinone or riboflavin that results in unavoidable incorporation of the absorption band at that wavelength.

By intentional adoption of camphorquinone or riboflavin, we have succeeded in achieving optically quite strictly homogeneous gelation through irradiation with light in the visible light range with no use of harmful ultraviolet radiation. We have also been able to provide a solution to the problems difficult to solve by use of other polymerization initiators.

Moreover, we have found out that the aforesaid absorption band problem with the use of camphorquinone or riboflavin, too, can be practically solved by using them in a controlled or decreased amount. According to the invention, camphorquinone or riboflavin has an absorption spectrum that shows a large absorption in a blue range (400 nm to 500 nm) peaking at about 460 nm, and so allows polymerization to start upon irradiation with blue visible light. In this connection, we have confirmed that although camphorquinone or riboflavin is not that high in water solubility, they have a water solubility good enough to work effectively as a photo-polymerization initiator and can provide optical defect-free yet high-quality gelled colloidal crystals without generating any gas bubbles upon polymerization reaction. Besides, we have ascertained that derivatives of camphorquinone or riboflavin, too, work as an effective photo-polymerization initiator as long as they maintain activity as a photo-polymerization initiator. A series of such findings about camphorquinone and riboflavin have underlain the present invention.

### ADVANTAGES OF THE INVENTION

According to the invention, colloidal crystals blended with a polymerizable monomer or macromer and a specific component polymerization initiator is irradiated with blue light in the visible range, thereby succeeding in homogeneously gelling and immobilizing the colloidal crystals having fluidity, and the resulting gelled colloidal crystals are more improved in quality and larger in size than those obtained by ultraviolet irradiation. Therefore, the invention is believed to give a push and make a lot of contribution to the utilization and practical use of colloidal crystals in the form of optical elements, and so is of ever greater significance.

### BRIEF EXPLANATION OF THE DRAWINGS

Fig. 1 is illustrative of the dependency on wavelength of the light transmittance of a colloidal crystal that has a longest Bragg wavelength of about 750 nm and is of good single crystallinity.
Fig. 2 is illustrative in schematic of the gelation system of the invention for preparing homogeneously gelled colloidal crystals.
Fig. 3 is illustrative in schematic of the gelation system of the invention for preparing homogeneously gelled colloidal crystals.
Fig. 4 is illustrative in schematic of the system for preparing gelded colloidal crystals of given shape.

### BEST MODE FOR CARRYING THE INVENTION

In the embodiments of the invention, especially in embodiments (3), (6), (10) to (24) and (26) to (31), some limitation is imposed on the irradiation light used for gelation or its source, because the light and its source recited therein are particularly preferable for camphorquinone, riboflavin or their derivative; this ensures larger and more homogeneous gelation than do conventional gelation means relying on light in the ultraviolet range. That is, the specific polymerization initiator cooperates with the specific light source to make it possible to obtain gelled colloidal crystals that are larger in size and more improved in quality than ever before, or gelled colloidal crystals of any desired shape. The advantages of the invention are far more favorable than those obtained by gelation means relying upon light in the ultraviolet range or other polymerization initiators. Especially when camphorquinone or riboflavin is used as the polymerization initiator, it is preferable in view of energy efficiency that a blue light source intensively containing a wavelength component at or near 460 nm is used as the irradiation light source.

It has been found that blue discharge lamps (such as blue neon lamps, blue fluorescent lamps, and blue metal halide lamps), blue light-emitting diodes, blue solid lasers and blue gas lasers are suitable for such light sources. Although the blue neon lamp actually uses argon gas and mercury instead of neon gas, it usually has the common name of neon. Accordingly, it is favorable to use those light sources for exciting light for polymerization initiation. More specifically, the blue light-emitting diode includes a GaN light-emitting diode with a center wavelength of about 470 nm; and the blue solid laser includes an Nd:YAG laser emitting a 473-nm wavelength light that is a second harmonics having an oscillation wavelength of 946 nm and a GaN laser of 410 nm. Exemplary blue gas lasers are an argon laser of 458 nm or 488 nm and an He-Cd laser of 442 nm.

Especially the blue discharge lamp and blue light-emitting diode of the blue light sources, because of being divergent light sources, are well suited for large-area irradiation. Use of the blue discharge lamp or the blue light-emitting diode as the light source ensures that a large area is so irradiated with light of uniform intensity that the whole sample containing camphorquinone or riboflavin as the initiator can be simultaneously and homogeneously gelled to obtain gelled colloidal crystals of large size.

On the other hand, the blue laser having an emission wavelength in the range of 400 nm to 500 nm, and the near infrared laser that is as effective as the blue laser as a result of the so-called two-photon absorption and has an emission wavelength in the range of 800 nm to 1,000 nm twice as long as that of blue laser light is well suited for the gelation of a specific narrow region. If, as recited in embodiment (32) or (33), a sample is irradiated and scanned by scanning means in any desired spatial configuration, it is then possible to gel the sample in any desired shape, thereby obtaining gelled colloidal crystals of given shape.

An account is now given of why the near infrared laser having a wavelength twice as long as that of blue laser light is as effective on gelation as the blue laser.

In ordinary photo-polymerization, a photo-polymerization initiator is excited upon irradiation with light having a wavelength commensurate with an excitation wavelength band for photo-polymerization, thereby setting off photo-polymerization; however, with irradiation with light having other wavelengths, there is no polymerization because the photo-polymerization initiator is never excited. Still, it has been known that upon irradiation with light of strong intensity just like light having a wavelength twice as long as that of said excitation wavelength band, there is a unique phenomenon referred to as two-photon absorption which in turn permits photons to be absorbed in the photo-polymerization initiator for exciting it, so that just as irradiation with the light in the excitation wavelength band, polymerization can be started (for instance, see non-patent publications 6, 7 and 8).

### Non-Patent Publication 6

S. Kawata et al. Nature, Vol. 412, 16, August 2001, pp. 697-698

### Non-Patent Publication 7

Retrieved on January 7, 2003 on the Internet: http://biomicro. ikuta. mech. nagoya-u. ac. jp/researches/biochemical-j/2photon. html

### Non-Patent Publication 8

Retrieved on January 7, 2003 on the Internet: http://www. nips. ac. jp/guide/res/cell. html

Such lasers as may be used for the excitation of camphorquinone or riboflavin include a pulse oscillation type Nd:YAG laser having an oscillation wavelength of 946 nm, and a pulse oscillation type titanium-sapphire laser having an oscillation wavelength of 800 nm to 1,000 nm.

In particular, embodiment (32) or (33) of the invention provides a system that is well suited for obtaining gelled colloidal crystals not only in a flat sheet form but also in a given form or pattern, and set up as recited therein.

This system ensures that upon gelation, a colloidal crystal is scanned and irradiated with light in a given form, so that it can be gelled in any desired form to obtain a homogeneously gelled, large-area colloidal crystal. The system of the invention is favorable in view of preparation processes, because some complicated steps of cutting samples out of the gelled colloidal crystal can be dispensed with. To this end, the system is designed such that only a specific site of the colloidal crystal to be gelled, with camphorquinone or riboflavin contained therein as the initiator, is spatially scanned and irradiated with a light beam from the blue laser light source or the near infrared laser having a wavelength twice as long or its condensed light. It is thus possible to gel only the site of the crystal irradiated with light, thereby preparing a gelled colloidal crystal of predesigned shape.

One exemplary given form of gelled colloidal crystal is a round form that is used for an optical filter as an example. As a large-area, sheet-like colloidal crystal to be gelled is circularly irradiated with light at only the site to be gelled to make a plurality of gelled colloidal crystals, it allows them to be prepared more efficiently than they are cut out of a wholly gelled single crystal. Thus, if gelation is carried out in a form well fit for the purpose, it is then possible to make preparation efficiency higher as compared with when crystal pieces are cut out of a large gelled colloidal crystal. A non-gelled portion of the crystal not irradiated with light, because of being in a non-solidified fluid state, may be washed away after the completion of gelling operation, so that only the gelled portion can be removed as solid.

### EMBODIMENTS OF THE INVENTION

The invention is now explained with reference to the examples and drawings. It is understood, however, that given as an aid to a better understanding of the invention, the examples are in no sense limited to the invention.

### Example 1

Submicron fine particles of uniform size (polystyrene or other polymer fine particles, various oxide particles inclusive of silica and titanium dioxide particles, and any fine particles such as metal particles) were dispersed in water to prepare a colloidal dispersion. The colloidal solution was adequately desalted by coexistence and contact with an ion exchange resin into a colloidal crystal state, thereby providing a solution 1.

Then, an aqueous solution of a polymerizable monomer that was a material forming a gel network structure was provided as a solution 2 (for instance, a 5M aqueous solution of acrylamide monomer), and a crosslinking agent aqueous solution as a solution 3 (for instance, a 0.1 M aqueous solution of methylene-bis(acrylamide). Further, a saturated aqueous solution of camphorquinone or riboflavin was provided as a solution 4.

These solutions 1, 2, 3, 4 and pure water were mixed together at a mixing volume ratio of 1.5:0.8:0.3:0.15:0.25 to prepare a colloidal crystal solution having a given volume fraction, through which an inert gas such as argon gas or nitrogen gas was passed to expel out dissolved oxygen in the solution. The resulting solution was filled in a knockdown transparent cell made of quartz glass or the like to make a colloidal crystal sample to be gelled.

Then, the colloidal crystal to be gelled was irradiated with light from a visible light source containing a blue wavelength component, for instance, a metal halide lamp or a halogen lamp.

In consideration of energy efficiency, a light source having a blue wavelength as a primary component is preferable for the light source giving out irradiation light. Such a light source, for instance, includes a blue neon lamp, a blue fluorescent lamp, a blue metal halide lamp (put on the market as Color HID Lamp), a blue light-emitting diode, a blue solid laser, and a blue gas laser.

Among these, the blue light-emitting diode is commercially available as GaN diodes. For the blue solid laser, GaN lasers (410 nm) and Nd-YAG lasers (473 nm) are commercially available, and for the blue gas laser, argon lasers (458 nm or 488 nm) and He-Cd lasers (442 nm) are on the market.

As the polymerization reaction was triggered by irradiation with light coming from the above light source, it caused polymerization of the monomer or macromer in the disperse medium, whereby the colloidal crystal was gelled homogeneously as a whole. In this way, a gelled colloidal crystal free from fluidity could be obtained.

The resulting gelled colloidal crystal was found to contain neither insoluble precipitates nor gas bubbles and their traces, both resulting from the polymerization initiator. That is, a gelled colloidal crystal that was free from any optical defect derived from the initiator and so of high quality could be obtained. Camphorquinone or riboflavin having a light absorption band at or near 460 nm means that the post-gelation colloidal crystal, too, has an absorption band at or near 460 nm. However, the amount of the initiator added was so small that influences of that absorption could be as small as negligible in ordinary applications.

In Example 1, by proper selection of the size and concentration of the particles used in solution 1, the lattice constant and the longest Bragg wavelength of the finally obtained gelled colloidal crystal can be controlled, and the properties of the colloidal crystal can be set in such a way as to have any desired value inclusive of about 800 nm at which the longest Bragg wavelength is to be set.

Especially when titanium dioxide is used as the particles, ultraviolet components of 400 nm or less must be removed from irradiation light for the purpose of holding back its photocatalyst reaction. Accordingly, when a light source containing such ultraviolet components is used as the light source, it is preferable to fully cut out ultraviolet radiation through an ultraviolet cut filter for irradiation purposes.

The gelation system of the invention is now explained with reference to Figs. 2 to 4. Referring first to Fig. 2, the gelation system is embodied as a light irradiator system 1 having a boxy vessel structure, the inside wall surface of which is made up of a material capable of reflecting light. The vessel houses a blue light source 2 and, facing this light source, the colloidal crystal sample 3 to be gelled, which is placed in a transparent cell, is positioned via a light diffuser 6. With actuation of a timer 5, the light source is put on to irradiate the colloidal crystal sample to be gelled with light, whereupon camphorquinone or riboflavin or their derivative added into and blended with the sample is excited by light and the polymerizable monomer or macromer likewise incorporated in the sample starts polymerization, so that the colloidal crystal is gradually gelled, and over time, the colloidal crystal is immobilized while losing its fluidity. As the timer set in tune with the gelling time stops, it allows the light source to be put off, bringing gelling operation to completion.

The explanation of the above preparation system and its operation mode is given for the purpose of illustration alone, not for the purpose of limitation to the invention. Insofar as the objects of the invention are achievable, no particular limitation is imposed on the type of light source, what relation the light source and the sample are positioned in, elements and parts, what relations they are positioned in, etc., and so a good deal of possible design modes are included in the invention. For instance, a plurality of light sources could be positioned about the colloidal crystal sample to be gelled for irradiation with light beams from a plurality of positions or, alternatively, the sample and the light source could be set such that they are relatively rotatable to uniformly irradiate the sample with light.

Referring again to Fig. 2, the light diffuser 6 is interposed between the light source 2 and the sample 3 so as to provide uniform irradiation of the sample with light through the light diffuser, ensuring homogeneous gelation of the sample.

The invention seeks to achieve gelation by irradiation with light in the visible light range, and the requirements to this end are that the polymerization initiator be selected from camphorquinone, riboflavin or their derivative, and used in combination with a light source suitable for that.

A variety of light sources could be used for that purpose. For instance, blue neon lamps, blue fluorescent lamps or blue metal halide lamps could be used as the blue discharge lamp in the system depicted in Fig. 2. If one selected from such lamps is used in combination with the colloidal crystal sample to be gelled, which contains camphorquinone, riboflavin or their derivative as the initiator, it is then possible to obtain a homogeneously gelled colloidal crystal of improved optical quality. In one embodiment of the system of the invention for preparing the gelled colloidal crystal wherein a plurality of GaN blue light-emitting diodes are used in place of such a discharge lamp, they are positioned on the inner surface or a portion of the inside ceil or wall of the light irradiation box.

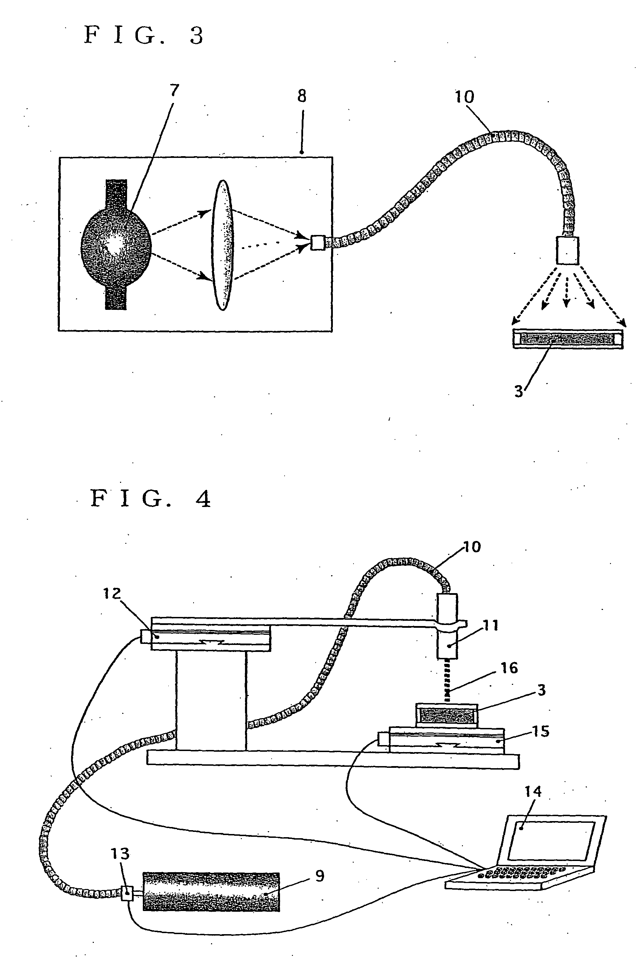

The above light irradiator system set up as the gelation system has a single unitary vessel structure. However, that system could also be designed in the form of a much handier type of light irradiator or gelation device, as shown in Fig. 3. More specifically, a blue light irradiator device 8 such as an optical fiber irradiator device, comprising a blue discharge lamp or a GaN blue light-emitting diode as a light-emitting source 7 is used to guide light to a given position by way of an optical fiber 10.

Referring then to Fig. 4, there is depicted a system for the preparation of a gelled colloidal crystal of given shape. Briefly, this system is built up of an XY plane translation mechanism 12 controlled by a computer 14, and an optical fiber emitting terminal 11 attached thereto. Laser light emitted out of a blue (or near infrared) laser 9 is guided to the emitting terminal 11 through an optical fiber 10, and the emitting terminal is freely movable in a plane vertical to the optical axis. Such an XY plane translation mechanism itself is well known in the art, and if it is combined with a commercially available electric-powered system, a computer controlled type system can then be easily set up.

The emitting terminal 11 of the optical fiber is provided with a condensing lens that allows condensed light to be directed onto a sample. On the way of an optical path running from the laser to the emitting terminal of the optical fiber, there is provided a computer controlled type of optical shutter mechanism 13. The computer 14 is programmed such that given two-dimensional shape data, a corresponding portion of the sample is irradiated with light. By movement of the emitting terminal 11 of the optical fiber and opening/closing of the optical shutter 13, the sample is irradiated with light in a given configuration. If the colloidal crystal sample 3 to be gelled, which contains camphorquinone, riboflavin or their derivative as the initiator, is used as the sample, it is then possible to obtain a colloidal crystal gel that is of given shape and improved optical quality.

In view of the appropriateness of emitting wavelength and ease of handling, the most preferable type of blue laser 9 is an Nd:YAG laser emitting light having a wavelength of 473 nm that is a second harmonic of an oscillation wavelength of 946 nm. However, any of the aforesaid blue lasers could be used as the light source.

An exemplary near infrared laser is a pulse oscillating Nd:YAG laser having an oscillation wavelength of 946 nm, and a pulse oscillating titanium-sapphire laser having an oscillation wavelength of 800 nm to 1,000 nm.

In a specific embodiment of light irradiation, the sample 3 to be gelled could be moved in a plane vertical to the optical axis instead of light scanning. In this case, a sample table 15 in Fig. 4 is designed as a computer controlled type XY electric-powered stage, so that in association with the optical shutter 13, the sample can be irradiated with light in a given configuration.

### POSSIBLE APPLICATIONS OF THE INVENTION TO THE INDUSTRY

The gelled colloidal crystal obtained according to the invention is more improved in quality and larger in size than ever before. The invention is of quite vital significance, because it would encourage the use and practical application of colloidal crystals as optical elements and make a great deal of contribution to the industry.

## Claims

1. A colloidal crystal to be gelled by light irradiation, using an aqueous liquid as a disperse medium and at least comprising a polymerizable monomer or macromer, a crosslinking agent and a photo-polymerization initiator, **characterized in that** camphorquinone, riboflavin, or their derivative is selectively used as said photo-polymerization initiator.

2. A gelled colloidal crystal, which uses an aqueous liquid as a disperse medium, at least comprises a polymerizable monomer or macromer, a crosslinking agent and a photo-polymerization initiator, and is gelled by light irradiation, **characterized in that** camphorquinone, riboflavin, or their derivative is selectively used as said photo-polymerization initiator.

3. The gelled colloidal crystal according to (2) above, wherein light including a wavelength component in a range of at least 400 nm to 500 nm is used for said light irradiation.

4. The gelled colloidal crystal according to claim 3 or 2 above, which contains titanium dioxide.

5. A gelled colloidal crystal preparation process, **characterized in that** a colloidal crystal to be gelled by light irradiation, using an aqueous liquid as a disperse medium and at least comprising a polymerizable monomer or macromer, a crosslinking agent and a photo-polymerization initiator, wherein camphorquinone, riboflavin, or their derivative is selectively used as said photo-polymerization initiator, is irradiated with light to polymerize said monomer or macromer for gelation of said colloidal crystal, thereby obtaining a gelled colloidal crystal.

6. The gelled colloidal crystal preparation process according to claim 5, **characterized in that** light having a wavelength component in a range of at least 400 nm to 500 nm is used for said light irradiation.

7. The gelled colloidal crystal preparation process according to claim 5 or 6, **characterized in that** said colloidal crystal to be gelled has a longest Bragg wavelength set at 700 to 1,000 nm.

8. The gelled colloidal crystal preparation process according to claim 5 or 6, **characterized in that** said colloidal crystal to be gelled contains titanium dioxide.

9. The gelled colloidal crystal preparation process according to claim 7, **characterized in that** said colloidal crystal to be gelled further contains titanium dioxide.

10. The gelled colloidal crystal preparation process according to claim 5 or 6, **characterized in that** said light irradiation source is a blue discharge lamp or a blue light-emitting diode.

11. The gelled colloidal crystal preparation process according to claim 7 or 8, **characterized in that** said light irradiation source is a blue discharge lamp or a blue light-emitting diode.

12. The gelled colloidal crystal preparation process according to claim 9, **characterized in that** said light irradiation source is a blue discharge lamp or a blue light-emitting diode.

13. The gelled colloidal crystal preparation process according to claim 5 or 7, **characterized in that** said light irradiation source is a blue laser having an emission wavelength in a range of 400 nm to 500 nm or a near infrared layer having an emission wavelength in a range of 800 nm to 1,000 nm.

14. The gelled colloidal crystal preparation process according to claim 8 or 9, **characterized in that** said light irradiation source is a blue laser having an emission wavelength in a range of 400 nm to 500 nm or a near infrared layer having an emission wavelength in a range of 800 nm to 1,000 nm.

15. The gelled colloidal crystal preparation process according to claim 10, **characterized in that** said blue discharge lamp is a blue neon lamp, a blue fluorescent lamp or a blue metal halide lamp.

16. The gelled colloidal crystal preparation process according to claim 11, **characterized in that** said blue discharge lamp is a blue neon lamp, a blue fluorescent lamp or a blue metal halide lamp.

17. The gelled colloidal crystal preparation process according to claim 12, **characterized in that** said blue discharge lamp is a blue neon lamp, a blue fluorescent lamp or a blue metal halide lamp.

18. The gelled colloidal crystal preparation process according to claim 10, **characterized in that** said blue light-emitting diode is a GaN blue light-emitting diode.

19. The gelled colloidal crystal preparation process according to claim 11, **characterized in that** said blue light-emitting diode is a GaN blue light-emitting diode.

20. The gelled colloidal crystal preparation process according to claim 12, **characterized in that** said blue light-emitting diode is a GaN blue light-emitting diode.

21. The gelled colloidal crystal preparation process according to claim 13, **characterized in that** said blue laser is an Nd:YAG laser that emits light of 473 nm in wavelength or a blue oscillating GaN laser, an argon laser that oscillates light of 458 nm or 488 nm, or an He-Cd laser that oscillates light of 442 nm.

22. The gelled colloidal crystal preparation process according to claim 14, **characterized in that** said blue laser is an Nd:YAG laser that emits light of 473 nm in wavelength or a blue oscillating GaN laser, an argon laser that oscillates light of 458 nm or 488 nm, or an He-Cd laser that oscillates light of 442 nm.

23. The gelled colloidal crystal preparation process according to claim 13, **characterized in that** said near infrared laser is an Nd:YAG laser that oscillates light of 946 nm in wavelength, or a titanium sapphire laser having an oscillation wavelength range of 800 nm to 1,000 nm.

24. The gelled colloidal crystal preparation process according to claim 14, **characterized in that** said near infrared laser is an Nd:YAG laser that oscillates light of 946 nm in wavelength, or a titanium sapphire laser having an oscillation wavelength range of 800 nm to 1,000 nm.

25. A gelled colloidal crystal preparation system for gelling a colloidal crystal to be gelled, which uses an aqueous liquid as a disperse medium and at least comprises a polymerizable monomer or macromer, a crosslinking agent, and camphorquinone, riboflavin, or their derivative as a photo-polymerization initiator, **characterized in that** said preparation system further comprises blue light as a irradiation light source.

26. The gelled colloidal crystal preparation system according to claim 25, **characterized in that** said irradiation light source is a blue discharge lamp or a blue light-emitting diode.

27. The gelled colloidal crystal preparation system according to claim 26, **characterized in that** said blue discharge lamp is a blue neon lamp, a blue fluorescent lamp or a blue metal halide lamp.

28. The gelled colloidal crystal preparation system according to claim 26, **characterized in that** said blue light-emitting diode is a GaN blue light-emitting diode.

29. The gelled colloidal crystal preparation system according to claim 25, **characterized in that** said irradiation light source is a blue laser having an emission wavelength in a range of 400 nm to 500 nm, or a near infrared laser having an emission wavelength in a range of 800 nm to 1,000 nm.

30. The gelled colloidal crystal preparation system according to claim 29, **characterized in that** said blue laser is an Nd:YAG laser that emits light of 473 nm in wavelength or a blue oscillating GaN laser, an argon laser that oscillates light of 458 nm or 488 nm, or an He-Cd laser that oscillates light of 442 nm.

31. The gelled colloidal crystal preparation system according to claim 29, **characterized in that** said near infrared laser is an Nd:YAG laser that oscillates light of 946 nm in wavelength, or a titanium-sapphire laser having an oscillation wavelength range of 800 nm to 1,000 nm.

32. The gelled colloidal crystal preparation system according to claim 29 or 30, **characterized by** comprising scanning means capable of scanning a laser light irradiation site in any spatial configuration.

33. The gelled colloidal crystal preparation system according to claim 31, **characterized by** comprising scanning means capable of scanning a laser light irradiation site in any spatial configuration.
